(19)

**Europäisches Patentamt**

**European Patent Office**

**Office européen des brevets**

(11) **EP 4 625 546 A1**

(12) **EUROPEAN PATENT APPLICATION**

(43) Date of publication:
**01.10.2025 Bulletin 2025/40**

(21) Application number: **25167223.4**

(22) Date of filing: **28.03.2025**

(51) International Patent Classification (IPC):
$H01M\ 4/58^{(2010.01)}$    $H01M\ 10/0525^{(2010.01)}$
$H01M\ 4/136^{(2010.01)}$    $H01M\ 4/02^{(2006.01)}$

(52) Cooperative Patent Classification (CPC):
**H01M 4/5825; H01M 10/052; H01M 10/0525;**
H01M 4/136; H01M 2004/021; H01M 2004/028;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.03.2024 CN 202410389552**

(71) Applicant: **BYD Company Limited
Shenzhen, Guangdong 518118 (CN)**

(72) Inventors:
- **MAO, Yue
  Shenzhen, 518118 (CN)**
- **LIU, Xia
  Shenzhen, 518118 (CN)**
- **ZHANG, Xuewen
  Shenzhen, 518118 (CN)**
- **CHEN, Sanzhi
  Shenzhen, 518118 (CN)**
- **HE, Kefeng
  Shenzhen, 518118 (CN)**

(74) Representative: **Mathys & Squire
The Shard
32 London Bridge Street
London SE1 9SG (GB)**

(54) **POSITIVE ELECTRODE ACTIVE MATERIAL, POSITIVE ELECTRODE, SECONDARY BATTERY, AND ELECTRIC DEVICE**

(57)    The present application provides a positive electrode active material, a positive electrode, a secondary battery, and an electrical device. A particle size distribution curve of the positive electrode active material satisfies a special mathematical relationship, and the positive electrode active material has a high compaction density, a good first charging gram capacity, and a high first cycle efficiency.

**EP 4 625 546 A1**

**Description**

FIELD

The present application relates to the technical field of battery materials, and specifically, to a positive electrode active material, a positive electrode, a secondary battery, and an electrical device.

BACKGROUND

To meet the market demand for electrical devices with long battery life, battery manufacturers are continuously working on increasing the energy density of batteries. Increasing the compaction density of the positive electrode active material in the battery is one of the key technical approaches to increase the energy density of the battery. Currently, in the industry, the compaction density is generally controlled by mixing positive electrode active materials with different average particle sizes and simply adjusting an average particle size ratio or parameters such as D50 and D90 of the positive electrode active materials. However, such a control method ignores the impact of particle size distribution of the positive electrode active material on the compaction density, and cannot precisely control the compaction density. As a result, the final compaction density of the positive electrode active material is limited, or a positive electrode active material with relatively high compaction density can be obtained, but other electrochemical properties of the final battery are unsatisfactory.

SUMMARY

Therefore, embodiments of the present application provide a positive electrode active material, a positive electrode, a secondary battery, and an electrical device. A particle size distribution curve of the positive electrode active material satisfies a special mathematical relationship, and the positive electrode active material has a high compaction density, a good first charging gram capacity, and a high first cycle efficiency.

A first aspect of the embodiments of the present application provides a positive electrode active material, a particle size distribution curve of the positive electrode active material having only a first peak, and the positive electrode active material satisfying:

$$7 \leq -6 \times f_{Dfp} + 80 \times f_{D70} + (D70/\mu m) + 1.2 \times Dspn + 0.3 \times Cu \leq 10;$$

or

a particle size distribution curve of the positive electrode active material including a first peak and a second peak in sequence in a first direction, and the positive electrode active material satisfying:

$$7 \leq -6 \times f_{Dfp} + 80 \times f_{Dsp} + Dsp + 1.2 \times Dspn + 0.3 \times Cu \leq 10;$$

an abscissa of the particle size distribution curve being particle size in $\mu m$; an ordinate of the particle size distribution curve being percentage by volume; the first direction being a direction from 0 to positive infinity of the abscissa of the particle size distribution curve;

Dfp being a value, in $\mu m$, of a particle size corresponding to a peak value of the first peak; $f_{Dfp}$ being the peak value of the first peak;

Dsp being a value, in $\mu m$, of a particle size corresponding to a peak value of the second peak; $f_{Dsp}$ being the peak value of the second peak; Dspn=(D90-D10)/D50, and Cu=D60/D10;

$f_{D70}$ is a percentage by volume corresponding to D70 in the particle size distribution curve of the positive electrode active material; and

D10, D50, D60, D70, and D90 are respectively particle sizes corresponding to cumulative percentages by volume of 10%, 50%, 60%, 70%, and 90% of the positive electrode active material, and are measured in $\mu m$.

The two specific mathematical relationships can respectively reflect the comprehensive impact of a plurality of particle size factors on the compaction density and the electrochemical performance that can be achieved by the positive electrode active material having one peak or a plurality of peaks in its particle size distribution curve. The values of the mathematical formulas are controlled within the range of 7 to 10, so that the positive electrode active material can achieve a relatively high compaction density while still achieving relatively good electrochemical performance.

In some embodiments of the present application, $1\% \leq f_{Dfp} \leq 20\%$; and/or $0.1 \leq Dfp \leq 1$. Preferably, $1\% \leq f_{Dfp} \leq 11\%$.

In some embodiments of the present application, $0<f_{D70}\leq20\%$; and/or $0.5~\mu m\leq D70\leq10~\mu m$. Preferably, $1\%\leq f_{D70}\leq8\%$.

In some embodiments of the present application, $Dspn\leq5$.

In some embodiments of the present application, $1.5\leq Cu\leq6$.

In some embodiments of the present application, $0.1~\mu m\leq D10\leq0.8~\mu m$.

In some embodiments of the present application, $0.3~\mu m\leq D50\leq3~\mu m$.

In some embodiments of the present application, $0.4~\mu m\leq D60\leq8~\mu m$.

In some embodiments of the present application, $0.6~\mu m\leq D90\leq12~\mu m$.

In some embodiments of the present application, $0.5\leq Dsp\leq10$; and/or $0<f_{Dsp}\leq20\%$. Preferably, $1\%\leq f_{Dsp}\leq8\%$.

In some embodiments of the present application, the positive electrode active material includes modified or unmodified lithium iron phosphate.

In some embodiments of the present application, a length-to-diameter of the positive electrode active material is in a range of (1-10/7):1.

A second aspect of the embodiments of the present application provides a positive electrode, including the positive electrode active material provided in the first aspect of the embodiments of the present application. With the positive electrode active material provided in the embodiments of the present application, the positive electrode can achieve a high compaction density, and can further achieve good electrochemical performance.

A third aspect of the embodiments of the present application provides a secondary battery, including a negative electrode, the positive electrode provided in the second aspect of the embodiments of the present application, and an electrolyte between the positive electrode and the negative electrode. With the positive electrode provided in the embodiments of the present application, the secondary battery can achieve a high energy density, and can also have good electrochemical performance.

A fourth aspect of the embodiments of the present application provides an electrical device, including the secondary battery provided in the embodiments of the third aspect of the present application. With the use of the secondary battery provided in the embodiments of the present application to supply power, the electrical device has good market competitiveness.

## BRIEF DESCRIPTION OF THE DRAWINGS

FIG. 1 is a schematic diagram of a particle size distribution curve of a positive electrode active material according to an embodiment of the present application; and

FIG. 2 is a schematic diagram of a particle size distribution curve of a positive electrode active material according to another embodiment of the present application.

## DETAILED DESCRIPTION

It can be understood that a particle size distribution curve of a positive electrode active material can flexibly reflect the particle size distribution of the positive electrode active material, for example, parameters such as D10, D50, and D90. These parameters are also of interest in the industry. However, more differences between different positive electrode active materials can actually be found according to the particle size distribution curve. For example, according to the number of peaks in the particle size distribution curve, the positive electrode active materials may be classified into a unimodal material including only one peak, a bimodal material including two peaks, and even a multimodal material including three or more peaks. In the industry, the particle size of the positive electrode active material is usually controlled according to a single parameter such as D10, D50, or D90. Such method achieves a limited effect, and often leads to low compaction density of the positive electrode active material or fails to achieve a balance between the compaction density and the electrochemical performance of the positive electrode active material.

To resolve the foregoing problems, it has been found through extensive theoretical derivation and experimental verification that parameters such as an ordinate and a peak position corresponding to a sharp peak in the particle size distribution curve of the positive electrode active material, and a particle size distribution width all affect the compaction density of the positive electrode active material, and when the parameters are controlled to satisfy specific mathematical relationships, a positive electrode active material having high compaction density and good electrochemical performance can be obtained.

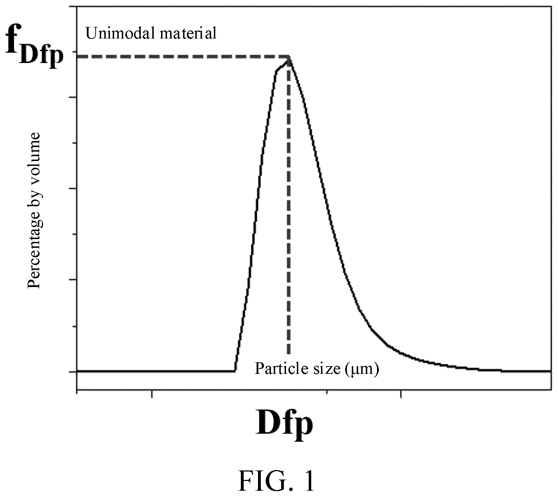

Specifically, an embodiment of the present application provides a positive electrode active material. Referring to FIG. 1, a particle size distribution curve of the positive electrode active material has only a first peak (for ease of description, this type of positive electrode active material is referred to as a "unimodal material" below), and the positive electrode active material satisfies:

$$7 \leq -6 \times f_{Dfp} + 80 \times f_{D70} + (D70/\mu m) + 1.2 \times Dspn + 0.3 \times Cu \leq 10 \quad \text{formula (1)}.$$

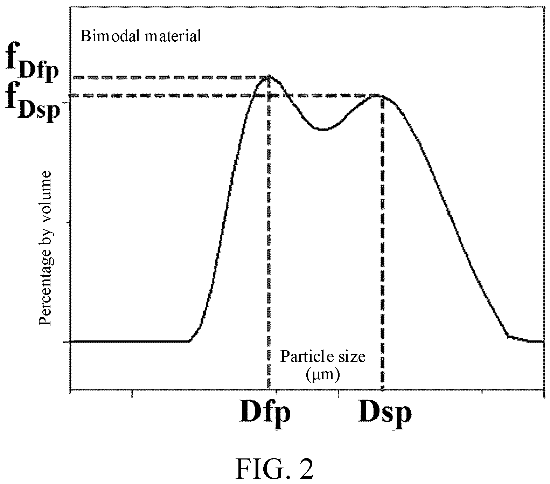

Alternatively, referring to FIG. 2, a particle size distribution curve of the positive electrode active material includes a first peak and a second peak in sequence in a first direction (for ease of description, this type of positive electrode active material is referred to as a "multimodal material" below), and the positive electrode active material satisfies:

$$7 \leq -6 \times f_{Dfp} + 80 \times f_{Dsp} + Dsp + 1.2 \times Dspn + 0.3 \times Cu \leq 10 \quad \text{formula (2)}.$$

An abscissa of the particle size distribution curve is particle size in $\mu m$. An ordinate of the particle size distribution curve is percentage by volume. The first direction is a direction from 0 to positive infinity of the abscissa of the particle size distribution curve.

In formula (1) and formula (2), Dfp is a value, in $\mu m$, of a particle size corresponding to a peak value of the first peak (i.e., an abscissa corresponding to a point having a maximum ordinate on the first peak); and $f_{Dfp}$ is the peak value of the first peak (i.e., the maximum ordinate of the first peak).

In formula (2), Dsp is a value, in $\mu m$, of a particle size corresponding to a peak value of the second peak (i.e., an abscissa corresponding to a point having a maximum ordinate on the second peak); and $f_{Dsp}$ is the peak value of the second peak (i.e., the maximum ordinate of the second peak).

Dspn=(D90-D10)/D50. Dspn represents the particle size distribution width. Cu=D60/D10. Cu represents a uniformity coefficient of the positive electrode active material.

$f_{D70}$ is a percentage by volume corresponding to D70 in the particle size distribution curve of the positive electrode active material.

D10, D50, D60, D70, and D90 are respectively particle sizes corresponding to cumulative percentages by volume of 10%, 50%, 60%, 70%, and 90% of the positive electrode active material, and are measured in $\mu m$.

For ease of description, the positive electrode active material having only one peak in the particle size distribution curve is referred to as a "unimodal material" below. The unimodal material has a high particle size concentration degree, and it is difficult to use particles with a large particle size and particles with a small particle size in combination to obtain a material with high compaction density. Although the multimodal material is a combination of particles with a large particle size and particles with a small particle size and can achieve a high compaction density more easily than a unimodal material, it is still desired in the industry to further increase the compaction density of the multimodal material while achieving good electrochemical performance.

Although increasing the particle size distribution width Dspn and/or the uniformity coefficient Cu can increase the compaction density of the positive electrode active material, simply increasing Dspn and/or Cu causes polarization of the battery and is not conducive to the capacity, rate performance, and low-temperature performance of the battery, because the lithium ion diffusion coefficient and the current density on the particle surface vary with positive electrode active materials with different particle sizes. However, based only on the parameters above mentioned, the particle size distribution of the positive electrode active material cannot be accurately controlled, the particle size distribution curve of the positive electrode active material cannot be determined, and the impact of the peak particle size and the D70 particle size that most frequently appear in the particle size distribution and have larger impact on the particle size distribution, and the volume ratios of the peak particle size and the D70 particle size is ignored. The parameters all affect the compaction density of the positive electrode active material, and even affect the compaction density and the electrochemical performance of the positive electrode active material in opposite ways. It is still difficult to increase the compaction density of the positive electrode active material while ensuring the electrochemical performance of the positive electrode active material.

It has been found through extensive research that by establishing a quantitative relationship between the parameters $f_{Dfp}$, Cu, Dspn, and $f_{D70}$ of the unimodal material, establishing a quantitative relationship between the parameters $f_{Dfp}$, Cu, Dspn, and $f_{Dsp}$ of the multimodal material, and respectively defining a first particle size index $M_1$ ($M_1 = -6 \times f_{Dfp} + 80 \times f_{D70} + (D70/\mu m) + 1.2 \times Dspn + 0.3 \times Cu$) and a second particle size index $M_2$ ($M_2 = -6 \times f_{Dfp} + 80 \times f_{Dsp} + Dsp + 1.2 \times Dspn + 0.3 \times Cu$), $M_1$ and $M_2$ can respectively reflect the comprehensible impact of particle size factors in the unimodal material and the multimodal material on the compaction density and electrochemical performance that can be achieved by the materials, and by respectively controlling the values of $M_1$ and $M_2$ within a range of 7 to 10, the positive electrode active material can achieve a relatively high compaction density while still achieving relatively good electrochemical performance, e.g., relatively high first charging capacity and first cycle efficiency. When values in a specific embodiment are substituted for calculation, for example, when $f_{Dfp}$=10% and $f_{D70}$=6%, 10% and 6% are directly substituted into the calculation formula of $M_1$.

For example, the values of $M_1$ and $M_2$ may be each independently 7.0, 7.2, 7.5, 7.8, 8.0, 8.2, 8.5, 8.8, 9.0, 9.2, 9.5, 9.8, 10.0, etc., but are not limited thereto. Excessively small values of $M_1$ and $M_2$ (less than 7) lead to a particle size of the positive electrode active material, poor machinability, concentrated particle size distribution, and reduced electrode plate compaction. Excessively large values of $M_1$ and $M_2$ (greater than 10) lead to too many ultra-large particles of the positive electrode active material, an increased ion diffusion path, a reduced capacity, poor particle fluidity, and reduced compaction.

It should be noted that in the embodiments of the present application, the particle size distribution curve of the positive electrode active material is obtained through testing by using a laser particle size analyzer. Therefore, parameters such as D10, D50, D60, D70, and D90 are also obtained through testing by using the laser particle size analyzer. It may be understood that (D70/$\mu$m) refers to a value obtained by dividing D70 by unit $\mu$m.

In some embodiments of the present application, the positive electrode active material includes, but is not limited to, modified or unmodified lithium iron phosphate. In some specific embodiments, the modified lithium iron phosphate includes, but is not limited to, a lithium iron phosphate modified by doping, for example, $Li_{1-a}A_aFe_{1-x}M_x(P_{1-y}E_y)O_4$, where $0 \leq a < 1$, $0 \leq x < 1$, $0 \leq y < 1$, and x, y, and a are not 0 at the same time. The element A includes, but is not limited to, at least one of alkali metal elements such as Na and K, the element M is selected from at least one of transition metal elements, and the element E includes, but is not limited to, at least one of elements such as B, Si, or S. In some specific embodiments, the modified lithium iron phosphate may be a lithium iron phosphate having a coating layer on its surface. For example, a material of the coating layer includes, but is not limited to, a conductive carbon material, a fast ion conductor material, and the like. In some specific embodiments, the modified lithium iron phosphate includes a lithium iron phosphate modified by doping and having a coating layer. The modified or unmodified lithium iron phosphate material may be prepared by using a solid phase method, or may be prepared by liquid phase synthesis.

In some embodiments of the present application, $1\% \leq f_{Dfp} \leq 20\%$. The foregoing situation is applicable to both the unimodal material and the multimodal material. For the unimodal material, when $f_{Dfp}$ is controlled within the above range, a risk of reduction in the compaction density caused by a relatively high particle size concentration of the positive electrode active material can be reduced. For the multimodal material, when $f_{Dfp}$ is controlled within the above range, the percentages by volume of other peaks (for example, the percentage by volume $f_{Dsp}$ of the second peak) are not greatly reduced, so that a positive electrode active material with a relatively high compaction density can be obtained. For example, the value of $f_{Dfp}$ may be, but is not limited to, 1%, 2%, 5%, 8%, 10%, 12%, 15%, 18%, 20%, etc. In some specific embodiments, $1\% \leq f_{Dfp} \leq 11\%$.

In some embodiments, $0.1 \leq Dfp \leq 1$. Dfp is a value, in $\mu$m, of a particle size corresponding to a peak value of the first peak (i.e., an abscissa corresponding to a point having a maximum ordinate on the first peak). It may be understood that currently, a wet process is more used for the production of positive electrode plates, i.e., a positive electrode active material and other materials (for example, a conductive agent and a binder) are first dispersed in a dispersion medium to obtain a positive electrode slurry, and then the positive electrode slurry is coated on a surface of a positive electrode current collector. For both the unimodal material and the multimodal material, controlling $0.1 \leq Dfp \leq 1$ can make the viscosity of the subsequently obtained positive electrode slurry fall within a suitable range, thereby improving the process capability of the positive electrode slurry. In addition, this is also beneficial for controlling the positive electrode active material to have a short diffusion path for active ions, have a suitable specific surface area, and have an electrochemical reaction activity, to facilitate full release of the material capacity. Particularly, when the battery discharges at a low temperature at a high rate, the contact resistance between particles is small, which is beneficial to the low-temperature performance and rate performance of the battery, and also beneficial to the rate performance of the battery at a low temperature. In addition, a risk of agglomeration of particles of the positive electrode active material can also be reduced. For example, Dfp may be, but is not limited to, 0.1, 0.2, 0.3, 0.4, 0.5, 0.6, 0.7, 0.8, 0.9, 1.0, etc. In some specific embodiments, $1\% \leq f_{Dfp} \leq 20\%$, and $0.1 \leq Dfp \leq 1$. Preferably, $1\% \leq f_{Dfp} \leq 11\%$, and $0.1 \leq Dfp \leq 1$.

In some embodiments of the present application, $Dspn \leq 5$. The particle size distribution width Dspn of the positive electrode active material is further controlled to be less than or equal to 5 when the values of $M_1$ or $M_2$ of the positive electrode active material are in the range of 7 to 10 helps balance the surface current density of different particles of the positive electrode active material during charge and discharge cycles, to reduce a risk of polarization of the battery and improve the performance of the battery. Specifically, the value of $D_{spn}$ may be, but is not limited to, 0.5, 1.0, 1.5, 2.0, 2.5, 3.0, 3.5, 4.0, 4.5, 5.0, etc.

In some embodiments of the present application, $1.5 \leq Cu \leq 6$. In this way, for the unimodal material and the multimodal material, the positive electrode active material not only has a certain non-uniformity, but also can effectively reduce a risk of discontinuous grading due to the missing of intermediate particle sizes of the positive electrode active material, so that a high compaction density can be easily achieved. For example, the value of Cu may be, but is not limited to, 1.5, 2, 2.5, 3, 3.5, 4, 4.5, 5, 5.5, 6, etc.

In some embodiments of the present application, $0.1\ \mu m \leq D10 \leq 0.8\ \mu m$. D10 is applicable to both the unimodal material and the multimodal material. The adjustment of the value of D10 can influence the values of Dspn and Cu at the same time, and has large impact on $M_1$ and $M_2$. When D10 is controlled to be within the above range to satisfy the definition of $M_1$ and $M_2$ in the embodiments of the present application, Dspn and Cu may be controlled to further improve the compaction density and the electrochemical performance of the positive electrode active material, and further reduce the risk of agglomeration of the positive electrode active material. For example, D10 of the positive electrode active material may be, but is not limited to, 0.1 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, etc.

In some embodiments of the present application, 0.3 $\mu$m$\leq$D50$\leq$3 $\mu$m. D50 is applicable to both the unimodal material and the multimodal material. In this way, Dspn of the positive electrode active material can be controlled within a proper range. In addition, D50 is a key parameter affecting the performance of the positive electrode active material in slurry preparation, and controlling D50 also helps improve the process capability of the positive electrode slurry. For example, D50 of the positive electrode active material may be, but is not limited to, 0.3 $\mu$m, 0.5 $\mu$m, 0.8 $\mu$m, 1.0 $\mu$m, 1.2 $\mu$m, 1.5 $\mu$m, 1.8 $\mu$m, 2.0 $\mu$m, 2.2 $\mu$m, 2.5 $\mu$m, 2.8 $\mu$m, 3.0 $\mu$m, etc.

In some embodiments of the present application, 0.4 $\mu$m$\leq$D60$\leq$8 $\mu$m. D60 is applicable to both the unimodal material and the multimodal material. D60 of the positive electrode active material may be adjusted in combination with D10 to adjust the value of Cu, thereby better balancing the performance of the positive electrode active material. For example, D60 of the positive electrode active material may be, but is not limited to, 0.4 $\mu$m, 0.5 $\mu$m, 0.8 $\mu$m, 1.0 $\mu$m, 1.2 $\mu$m, 1.5 $\mu$m, 1.8 $\mu$m, 2.0 $\mu$m, 2.2 $\mu$m, 2.5 $\mu$m, 2.8 $\mu$m, 3.0 $\mu$m, 3.2 $\mu$m, 3.5 $\mu$m, 3.8 $\mu$m, 4.0 $\mu$m, 5.0 $\mu$m, 6.0 $\mu$m, 7.0 $\mu$m, 8.0 $\mu$m, etc.

In some embodiments of the present application, 0.6 $\mu$m$\leq$D90$\leq$12 $\mu$m. Controlling D90 to be within the above range can adapt to D10 and D50 of the positive electrode active material (including the unimodal material and the multimodal material), thereby adjusting the particle size distribution width Dspn of the positive electrode active material more appropriately, and improving the overall performance of the positive electrode active material. In addition, a risk of formation of excessively large particles in the positive electrode material can be avoided, a decrease in capacity due to an increase in the lithium ion diffusion path can be avoided, and a decrease in cycle capacity due to cracking of excessively large particles and side reactions between exposed new surfaces and the electrolyte solution during cycles can be avoided. For example, D90 of the positive electrode active material may be, but is not limited to, 0.6 $\mu$m, 0.8 $\mu$m, 1.0 $\mu$m, 1.5 $\mu$m, 2.0 $\mu$m, 2.5 $\mu$m, 3.0 $\mu$m, 3.5 $\mu$m, 4.0 $\mu$m, 4.5 $\mu$m, 5.0 $\mu$m, 5.5 $\mu$m, 6.0 $\mu$m, 6.5 $\mu$m, 7.0 $\mu$m, 7.5 $\mu$m, 8.0 $\mu$m, 8.5 $\mu$m, 9.0 $\mu$m, 9.5 $\mu$m, 10.0 $\mu$m, 10.5 $\mu$m, 11.0 $\mu$m, 11.5 $\mu$m, 12.0 $\mu$m, etc.

In some embodiments of the present application, for the unimodal material, 0<$f_{D70}$$\leq$20%. In other words, the percentage by volume corresponding to D70 of the positive electrode active material having only one sharp peak in its particle size distribution curve is greater than 0 and less than or equal to 20% in the particle size distribution curve. In this way, the compaction density of the material can be improved. In some specific embodiments, 1%$\leq$$f_{D70}$$\leq$20%. Further, 1%$\leq$$f_{D70}$$\leq$8%. For example, $f_{D70}$ of the positive electrode active material may be, but is not limited to, 1%, 2%, 5%, 8%, 10%, 12%, 15%, 18%, 20%, etc. It should also be noted that, although $f_{D70}$ of the multimodal material can also be measured, attention only needs to be paid to $f_{Dsp}$ for the multimodal material.

In some embodiments of the present application, 0.5 $\mu$m$\leq$D70$\leq$10 $\mu$m. For the unimodal material, controlling the particle size of particles of the positive electrode active material that account for cumulative 70% by volume to be within the above range can effectively reduce the path length of active ions in the particles of the positive electrode active material, and appropriately increase the specific surface area, thereby improving the rate performance and low-temperature performance, including the rate performance at a low temperature, of the final battery. This also facilitates the release of the material capacity. For example, D70 of the positive electrode active material may be, but is not limited to, 0.5 $\mu$m, 1.0 $\mu$m, 1.5 $\mu$m, 2.0 $\mu$m, 2.5 $\mu$m, 3.0 $\mu$m, 3.5 $\mu$m, 4.0 $\mu$m, 4.5 $\mu$m, 5.0 $\mu$m, 5.5 $\mu$m, 6.0 $\mu$m, 6.5 $\mu$m, 7.0 $\mu$m, 7.5 $\mu$m, 8.0 $\mu$m, 8.5 $\mu$m, 9.0 $\mu$m, 9.5 $\mu$m, 10.0 $\mu$m, etc. In some specific embodiments, 0<$f_{D70}$$\leq$20%, and 0.5 $\mu$m$\leq$D70$\leq$10 $\mu$m. Preferably, 1%$\leq$$f_{D70}$$\leq$8%, and 0.5 $\mu$m$\leq$D70$\leq$10 $\mu$m. It should also be noted that, although the multimodal material also has D70, the impact of Dsp on the final electrochemical performance of the multimodal material is greater, and D70 of the multimodal material does not need to be considered.

In some embodiments of the present application, for the multimodal material, especially for a bimodal material, 0%<$f_{Dsp}$$\leq$20%. Controlling $f_{Dsp}$ to be within the above range does not greatly reduce $f_{Dfp}$, and can improve the compaction density of the positive electrode active material as much as possible while controlling the value of $M_2$ to be within the range of 7 to 10. In some specific embodiments, 1%$\leq$$f_{Dsp}$$\leq$20%. Further, 1%$\leq$$f_{Dsp}$$\leq$8%. For example, the value of $f_{Dsp}$ may be, but is not limited to, 1%, 2%, 5%, 8%, 10%, 12%, 15%, 18%, 20%, etc.

In some embodiments of the present application, for the multimodal material, especially for a bimodal material, 0.5$\leq$$D_{sp}$$\leq$10. Controlling the peak particle size of the second peak of the positive electrode active material to be within the above range can effectively reduce the risk of agglomeration of particles of the positive electrode active material, shorten the diffusion path for active ions, and achieve a suitable specific surface area. In this way, the risk of side reactions between the particles of the positive electrode active material and the electrolyte solution can be reduced, and a suitable number of contact points can be provided between the particles, thereby facilitating the release of the material capacity, improving the first coulombic efficiency of the battery, and improving the low-temperature performance and rate performance of the battery. For example, $D_{sp}$ may be, but is not limited to, 0.5, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, etc. In some specific embodiments, 0.5$\leq$Dsp$\leq$10, and 0<$f_{Dsp}$$\leq$20%. Preferably, 0.5$\leq$Dsp$\leq$10, and 1$\leq$$f_{Dsp}$$\leq$8%.

In some embodiments of the present application, the multimodal material is a bimodal material, i.e., the particle size distribution curve of the positive electrode active material includes only a first peak and a second peak in sequence in the first direction.

In some embodiments of the present application, a length-to-diameter of the positive electrode active material is in a range of (1-10/7):1. In other words, a length of the positive electrode active material particle is defined as L, a radial length (a short side dimension) of the positive electrode active material particle is defined as d, and $1 \leq L/d \leq 10/7$. In this way, the positive electrode active material can be more easily and densely arranged, and a suitable specific surface area of the positive electrode active material can be ensured while ensuring the particle size of the positive electrode active material, thereby improving the first-cycle retention rate of the positive electrode active material. For example, L/d of the positive electrode active material may be 1:1, 1.1:1, 1.2:1, 1.3:1, 1.4:1, 1.42:1, 1.428:1, etc. In an embodiment of the present application, L/d of the positive electrode active material may be determined by using a scanning electron microscope (SEM). Specifically, A cross-section of the positive electrode active material layer or the positive electrode active material particles is obtained through ion cutting. An SEM image is captured. Statistics on cross-sections of particles in the SEM image the length (L) and a radial length (d) are collected for calculation.

In an embodiment of the present application, the above morphology of the positive electrode active material may also be characterized according to a cross-sectional circularity of the positive electrode active material particle instead of the length-to-diameter, and he cross-sectional circularity of the positive electrode active material is greater than or equal to 0.74 and less than or equal to 1. Specifically, cross-sectional circularity = diameter of an equivalent circle having the same area as the cross-section of the positive electrode active material particle / longest side dimension of the cross-section. Similarly, the cross-sectional circularity of the positive electrode active material particle may be determined by using an SEM. For example, the cross-sectional circularity of the particles of the positive electrode active material may be, but is not limited to, 0.74, 0.75, 0.80, 0.85, 0.90, 0.95, 1.00, etc.

According to the positive electrode active material provided in the embodiments of the present application, correspondingly, a method for preparing positive electrode active material particles may be further provided, including:

providing a positive electrode active material and mixing, wherein a particle size distribution curve of the positive electrode active material has only a first peak, and values of $f_{Dfp}$, $f_{D70}$, D70, Dspn, and Cu of the positive electrode active material satisfy:

$$7 \leq -6 \times f_{Dfp} + 80 \times f_{D70} + (D70/\mu m) + 1.2 \times Dspn + 0.3 \times Cu \leq 10,$$

or

a particle size distribution curve of the positive electrode active material includes a first peak and a second peak in sequence in a first direction, and values of $f_{Dfp}$, $f_{Dsp}$, Dsp, Dspn, and Cu of the positive electrode active material satisfy:

$$7 \leq -6 \times f_{Dfp} + 80 \times f_{Dsp} + Dsp + 1.2 \times Dspn + 0.3 \times Cu \leq 10.$$

The preparation method is of instructive significance to the control of the compaction density and the electrochemical performance data of the positive electrode active material. Specifically, A person of ordinary skill in the art may mix different positive electrode active materials according to a particle size distribution curve model ($M_1$ and $M_2$) of the positive electrode active material provided in the embodiments of the present application, and determine raw materials to be selected and a mixing ratio of the raw materials according to the model.

It can be understood that, to improve the comprehensive performance of the positive electrode active material or to obtain the positive electrode active material that meets the particle size distribution defined above, different positive electrode active particles often need to be mixed. Specifically, different positive electrode active particles are materials with different particle size distributions, and other features are not used as distinguishing features of "whether two materials are the same type of positive electrode active material".

In some embodiments of the present application, the positive electrode active material includes two or more types of positive electrode active particles. For ease of description, different positive electrode active materials are referred to as a first positive electrode active material, a second positive electrode active material, and an $N^{th}$ positive electrode active material (where N is a positive integer greater than or equal to 3). Each type of positive electrode active particle has a different particle size distribution.

At S01, particle size distribution curves of the N types of positive electrode active particles are respectively tested, and a percentage by volume of each particle size in the mixed material is predicted. For example, in the positive electrode active particles, percentages by volume of particles with a particle size of a1 $\mu$m is defined as b11, b12, ..., b1n, percentages by volume of particles with a particle size of a2 $\mu$m is defined as b21, b22, ..., b2n, percentages by volume of particles with a particle size of an $\mu$m is defined as bn1, bn2, ..., bnn, and so on. Based on the total volume of the mixed positive electrode active materials, volume proportions of the first positive electrode active material, the second positive electrode active material, and the $N^{th}$ positive electrode active material are respectively defined as x1, x2, ..., xn. In this case, the percentage by volume of the particles with the particle size of a1 $\mu$m after the mixing is b1'=a1×b11+a1×-b12+...+a1×b2n, the percentage by volume of the particles with the particle size of a2 $\mu$m after the mixing is b2'= a2×b21+a2×b22+...+a2×b2n, ..., and the percentage by volume of the particles with the particle size of an $\mu$m after the mixing is bn'= an×bn1+an×bn2+...+an×bnn.

At S02, a predicted particle size distribution curve is drawn according to the predicted percentages by volume of the particle sizes in the mixed material, the particle size distribution curve is analyzed, and $M_1$ or $M_2$ is calculated, x1, x2, ..., xn are adjusted so that $7 \leq M_1 \leq 10$ or $7 \leq M_2 \leq 10$, the final x1, x2, ..., xn are determined, and the positive electrode active particles are mixed according to the volume proportions to obtain the positive electrode active material.

In some embodiments of the present application, the percentages by volume x1, x2, ..., xn of the positive electrode active particles are adjusted, so that $M_1$ or $M_2$ is infinitely close to 10. In this case, the compaction density of the final positive electrode active material can be further increased.

The preparation method is simple and easy to implement, has high production efficiency, and is suitable for large-scale industrial production. In addition, the preparation method can be used to quickly determine whether the mixing ratio of the positive electrode active particles can produce a positive electrode active material with a high compaction density and good electrochemical performance, thereby greatly reducing the time and costs of industrial production and providing guidance.

In an embodiment of the present application, when two or more types of positive electrode active particles are mixed, it is not necessary to require each type of positive electrode active particles to satisfy $7 \leq M_1 \leq 10$ or $7 \leq M_2 \leq 10$, as long as the positive electrode active material finally obtained through mixing satisfies $7 \leq M_1 \leq 10$ or $7 \leq M_2 \leq 10$.

In some embodiments of the present application, the positive electrode active particles are lithium iron phosphate particles prepared by a solid phase method. In some specific examples of the present application, a lithium source, an iron source, a phosphorus source, and a carbon source are mixed, sintered, crushed, and sieved to obtain the lithium iron phosphate particles. The lithium source includes, but is not limited to, lithium carbonate, lithium dihydrogen phosphate, etc. The iron source includes, but is not limited to, anhydrous ferric phosphate, ferrous oxalate, etc. The phosphorus source includes, but is not limited to, anhydrous ferric phosphate, lithium dihydrogen phosphate, etc. The carbon source includes, but is not limited to, glucose, sucrose, starch, polyethylene glycol (PEG), phenolic resin, or other carbon sources commonly used in the field.

In some other embodiments of the present application, the lithium iron phosphate particles are obtained by using a liquid phase method. The liquid phase method may be a self-heating evaporation process or a hydrothermal process. When the self-heating evaporation process is used, the iron source includes, but is not limited to, an iron block, iron nitrate, or other iron salts commonly used in the field; the lithium source includes, but is not limited to, lithium carbonate, lithium hydroxide, or other lithium salts commonly used in the field; the phosphorus source includes, but is not limited to, phosphoric acid; and the carbon source includes, but is not limited to, glucose, sucrose, starch, PEG, phenolic resin, or other carbon sources commonly used in the field. When the hydrothermal process is used, the iron source includes, but is not limited to, ferrous sulfate or other ferrous salts commonly used in the field; the lithium source includes, but is not limited to, lithium hydroxide or other lithium salts commonly used in the field; the phosphorus source includes, but is not limited to, phosphoric acid; and the carbon source includes, but is not limited to, glucose, sucrose, starch, PEG, phenolic resin, or other carbon sources commonly used in the field.

An embodiment of the present application further provides a positive electrode, including the positive electrode active material provided in the embodiments of the present application. With the positive electrode active material provided in the embodiments of the present application, the positive electrode can achieve a high compaction density, and can further achieve good electrochemical performance, for example, a high first discharge specific capacity and high first cycle efficiency.

In some embodiments of the present application, the positive electrode includes a positive electrode current collector and a positive electrode material layer arranged on at least one side surface of the positive electrode current collector. The positive electrode material layer includes the positive electrode active material provided in the embodiments of the present application, a binder, and optionally a conductive agent.

In an embodiment of the present application, the positive electrode current collector is any known current collector suitable for a positive electrode, for example, an aluminum foil suitable for a positive electrode of a lithium ion battery. The binder is any known binder well-known in the art and suitable for a positive electrode, for example, polyvinyl difluoride. The conductive agent is any known conductive agent well-known in the art and suitable for a positive electrode, for example, super p, graphene, carbon nanotubes, etc.

An embodiment of the present application further provides a secondary battery, including the positive electrode provided in the embodiments of the present application. With the positive electrode provided in the embodiments of the present application, the secondary battery can achieve a high energy density, and can also have good electrochemical performance.

In some embodiments of the present application, the secondary battery includes the positive electrode provided in the embodiments of the present application, a negative electrode, and an electrolyte between the positive electrode and the negative electrode.

In some embodiments of the present application, the secondary battery is a lithium secondary battery.

In an embodiment of the present application, the secondary battery may be a liquid-state battery using a liquid electrolyte, a solid-state battery using a solid electrolyte, or a semi-solid-state battery.

In an embodiment of the present application, the secondary battery is completely discharged and disassembled. The positive electrode is taken out, and soaked in dimethyl carbonate (DMC) for 10 min to 20 min to clean residual electrolyte. The positive electrode material layer on the positive electrode current collector is scraped off by using a ceramic scraper, placed in an aluminum box, and dried in a vacuum oven at 105°C for 6 h to 12 h to obtain a dry powder sample. A particle size distribution curve of the positive electrode active material is tested according to GB/T 19077.1 "Particle size analysis - Laser diffraction methods".

An embodiment of the present application further provides an electrical device, including the secondary battery provided in the embodiments of the present application. With the use of the secondary battery provided in the embodiments of the present application to supply power, the electrical device has strong market competitiveness.

In some embodiments of the present application, the electrical device includes, but is not limited to, a vehicle, a 3C electronic product, etc. The vehicle includes, but is not limited to, a new energy car, an electric vehicle, etc.

The technical solutions of the present application will be further described below through multiple examples.

Example 1

A positive electrode active material (specifically lithium iron phosphate) is provided. A particle size distribution curve of the positive electrode active material includes a first peak and a second peak in sequence in a first direction. Specifically, For the positive electrode active material, $f_{Dfp}$=6.03%, $f_{Dsp}$=4.9%, Dfp=0.46, Dsp=1.651, Dspn=2.75, Cu=3.64, D10=0.364 $\mu$m, D50=0.981 $\mu$m, D60=1.326 $\mu$m, and D90=3.06$\mu$m.

$$-6 \times f_{Dfp} + 80 \times f_{Dsp} + Dsp + 1.2 \times Dspn + 0.3 \times Cu = 9.600.$$

Example 2

A positive electrode active material (specifically lithium iron phosphate) is provided. A particle size distribution curve of the positive electrode active material includes only one peak. Specifically, For the positive electrode active material, $f_{Dfp}$=10.42%, Dfp=0.405, $f_{D70}$=6.19%, D70=0.675 $\mu$m, Dspn=2.3, Cu=1.98, D10=0.311 $\mu$m, D50=0.532 $\mu$m, D60=0.615 $\mu$m, and D90=1.532 $\mu$m.

$$-6 \times f_{Dfp} + 80 \times f_{D70} + (D70/\mu m) + 1.2 \times Dspn + 0.3 \times Cu = 8.349.$$

Example 3

A positive electrode active material is obtained by mixing the positive electrode active material of Example 1 with the positive electrode active material of Example 2 at a volume ratio of 9:1. A particle size distribution curve of the positive electrode active material of Example 3 includes a first peak and a second peak in sequence in a first direction. Specifically, For the positive electrode active material, $f_{Dfp}$=5.97%, Dfp=0.405, $f_{Dsp}$=4.75%, Dsp=1.45, Dspn=2.794, Cu=3.583, D10=0.314 $\mu$m, D50=0.872 $\mu$m, D60=1.125 $\mu$m, and D90=2.75 $\mu$m.

$$-6 \times f_{Dfp} + 80 \times f_{Dsp} + Dsp + 1.2 \times Dsp_n + 0.3 \times Cu = 9.323.$$

Example 4

A positive electrode active material is obtained by mixing the positive electrode active material of Example 1 with the positive electrode active material of Example 2 at a volume ratio of 5:5. A particle size distribution curve of the positive electrode active material of Example 4 includes only one peak. Specifically, For the positive electrode active material, $f_{Dfp}$=7.77%, Dfp=0.357, $f_{D70}$=3.358%, D70=0.932 $\mu$m, Dspn=2.746, Cu=3.1535, D10=0.3355, D50=0.820 $\mu$m, D60=1.058 $\mu$m, and D90=2.585 $\mu$m.

$$-6 \times f_{Dfp} + 80 \times f_{D70} + (D70/\mu m) + 1.2 \times Dspn + 0.3 \times Cu = 7.390.$$

Example 5

A positive electrode active material is obtained by mixing the positive electrode active material of Example 1 with the positive electrode active material of Example 2 at a volume ratio of 1:9. A particle size distribution curve of the positive electrode active material of Example 5 includes only one peak. Specifically, For the positive electrode active material, $f_{Dfp}$=9.811%, Dfp=0.314, $f_{D70}$=5.53%, D70=0.559 $\mu$m, Dspn=2.72, Cu=2.95, D10=0.3355 $\mu$m, D50=0.767 $\mu$m, D60=0.991 $\mu$m, and D90=2.421 $\mu$m.

$$-6\times f_{Dfp}+80\times f_{D70}+(D70/\mu m)+1.2\times Dspn+0.3\times Cu=8.543.$$

To highlight the beneficial effects of the embodiments of the present application, the following comparative examples are provided.

Comparative Example 1

A positive electrode active material being lithium iron phosphate is provided. A particle size distribution curve of the positive electrode active material includes a first peak and a second peak in sequence in a first direction. For the positive electrode active material, $f_{Dfp}$=9.65%, $f_{Dsp}$=1.88%, Dsp=3.125, Dspn=5.4, Cu=2.08, D10=0.323 $\mu$m, D50=0.575 $\mu$m, D60=0.671 $\mu$m, and D90=3.428 $\mu$m.

$$-6\times f_{Dfp}+80\times f_{Dsp}+Dsp+1.2\times Dspn+0.3\times Cu=11.153.$$

Comparative Example 2

A positive electrode active material being lithium iron phosphate is provided. A particle size distribution curve of the positive electrode active material includes a first peak and a second peak in sequence in a first direction. For the positive electrode active material, $f_{Dfp}$=6.38%, $f_{Dsp}$=4.21%, Dsp=3.55, Dspn=4.74, Cu=4.98, D10=0.388 $\mu$m, D50=1.06 $\mu$m, D60=1.931 $\mu$m, and D90=5.412 $\mu$m.

$$-6\times f_{Dfp}+80\times f_{Dsp}+Dsp+1.2\times Dspn+0.3\times Cu=13.716.$$

Comparative Example 3

A positive electrode active material being lithium iron phosphate is obtained by mixing the positive electrode active materials of Comparative Example 1 and Comparative Example 2 according to a volume ratio of 5:5. A particle size distribution curve of the positive electrode active material includes a first peak and a second peak in sequence in a first direction. For the positive electrode active material, $f_{Dfp}$=8.02%, $f_{Dsp}$=3.01%, Dsp=3.34, Dspn=5.863, and Cu=2.61. D10=0.314 $\mu$m, D50=0.6345 $\mu$m, D60=0.8195 $\mu$m, and D90=4.034 $\mu$m.

$$-6\times f_{Dfp}+80\times f_{Dsp}+Dsp+1.2\times Dspn+0.3\times Cu=13.075.$$

Comparative Example 4

A positive electrode active material (specifically lithium iron phosphate) is provided. A particle size distribution curve of the positive electrode active material includes only one peak. Specifically, For the positive electrode active material, $f_{Dfp}$=7.72%, $f_{D70}$=7.565%, D70=9.2675 $\mu$m, Dspn=1.81, Cu=3.41, D10=2.238 $\mu$m, D50=7.457 $\mu$m, D60=7.637 $\mu$m, and D90=15.758 $\mu$m.

$$-6\times f_{Dfp}+80\times f_{D70}+(D70/\mu m)+1.2\times Dspn+0.3\times Cu=18.056.$$

Comparative Example 5

A positive electrode active material (specifically lithium iron phosphate) is provided. A particle size distribution curve of the positive electrode active material includes only one peak. Specifically, For the positive electrode active material, $f_{Dfp}$=10.96%, $f_{D70}$=10.57%, D70=40.146 $\mu$m, Dspn=1.21, Cu=2.13, D10=16.60 $\mu$m, D50=34.40 $\mu$m, D60=35.34

μm, and D90=58.20 μm.

$$-6\times f_{Dfp}+80\times f_{D70}+(D70/\mu m)+1.2\times Dspn+0.3\times Cu=50.034.$$

Comparative Example 6

A positive electrode active material being lithium iron phosphate is provided. A particle size distribution curve of the positive electrode active material includes a first peak and a second peak in sequence in a first direction. For the positive electrode active material, $f_{Dfp}$=11.27%, $f_{Dsp}$=7.91%, Dsp=0.594, Dspn=3.68, Cu=1.74, D10=0.30 μm, D50=0.50 μm, D60=0.52 μm, and D90=2.14 μm.

$$-6\times f_{Dfp}+80\times f_{Dsp}+Dsp+1.2\times Dspn+0.3\times Cu=11.180.$$

Comparative Example 7

A positive electrode active material being lithium iron phosphate is provided. A particle size distribution curve of the positive electrode active material includes a first peak and a second peak in sequence in a first direction. For the positive electrode active material, $f_{Dfp}$=5.78%, $f_{Dsp}$=5.14%, Dsp=2.75, Dspn=3.022, Cu=6.61, D10=0.366 μm, D50=2.018 μm, D60=2.421 μm, and D90=6.465 μm.

$$-6\times f_{Dfp}+80\times f_{Dsp}+Dsp+1.2\times Dspn+0.3\times Cu=12.126.$$

The particle size distribution curves of the materials of the examples and comparative examples are measured according to GB/T 19077.1 "Particle size analysis - Laser diffraction methods". The results are summarized above.

Performance test

(1) Preparation of positive electrode and compaction density test: The positive electrode active materials of the examples and comparative examples, a binder (specifically PVDF), and a conductive agent (specifically conductive carbon black) are mixed at a mass ratio of 90:5:5, dispersed in a solvent (specifically N-methylpyrrolidone), and mixed evenly to obtain a positive electrode slurry.
The positive electrode slurry is coated on two opposing surfaces (where the two surfaces had the same areal density of 440 g/cm$^3$ in the examples) of a positive electrode current collector (specifically, a carbon-coated aluminum foil), dried, and cut into 4*20 cm strips. Front and back surfaces of the electrode plate samples are respectively rolled once by using a MSK-DPC-B320 precision rolling press from Shenzhen Kejing Star Technology Company with a pressure of 35 T, a roll gap of 0.12 mm, and a feeding speed of 1.5 m/min. Five small discs with a diameter of 30 mm are taken from the strip-shaped electrode plate for measuring a thickness of the positive electrode material layer and calculating a compaction density of each positive electrode active material. Compaction density of the positive electrode material = (weight of the positive electrode disc - weight of the 30 mm diameter carbon-coated aluminum foil disc) / (area of the 30 mm positive electrode disc * thickness of the positive electrode material layer). The results are summarized in Table 1.
(2) Preparation of batteries to be tested: The positive electrode plate is cut into small discs of 14 mm by using a disc cutter, baked in an air drying box at 105°C for 2 h, transferred to a glove box for assembly with a negative electrode (specifically a lithium plate with a diameter of 16 mm), followed by injection of an electrolyte solution, sealing by using a sealing machine, and standing at room temperature for 12 h to 24 h, to prepare a 2016-type button cell. The electrolyte solution is an organic solvent containing a lithium salt (specifically lithium hexafluorophosphate). The concentration of the lithium salt is 1 mol/L. The organic solvent includes ethylene carbonate, ethyl methyl carbonate, dimethyl carbonate, and vinyl carbonate. The mass ratio of ethylene carbonate to ethyl methyl carbonate to dimethyl carbonate in the organic solvent is 3:6:1. The percentage by weight of vinyl carbonate is 1%.
(3) Electrochemical performance test: Each of the to-be-tested cells prepared in the step (2) is connected to a battery cabinet, charged to 3.8 V at 0.1 C at a constant current, then charged to a current of less than or equal to 0.02 C at a constant voltage, allowed to stand for 10 min, and then discharged to 2.5 V at 0.1 C at a constant current. The first charge capacity is recorded, and the first charge gram capacity of the cell is calculated. First charge gram capacity = first charge capacity / mass of the positive electrode active material. First cycle efficiency = first discharge capacity / first charge capacity $\times$ 100%. The results are summarized in Table 1.

Table 1

| Case | Compaction density (g/cm³) | First charging gram capacity (mAh/g) | First cycle efficiency (%) |
|---|---|---|---|
| Example 1 | 2.67 | 160.5 | 98.5% |
| Example 2 | 2.65 | 161.0 | 97.9% |
| Example 3 | 2.68 | 160.0 | 98.6% |
| Example 4 | 2.61 | 160.3 | 98.3% |
| Example 5 | 2.64 | 161.0 | 98.6% |
| Comparative Example 1 | 2.45 | 159.8 | 99.1% |
| Comparative Example 2 | 2.48 | 158.8 | 97.8% |
| Comparative Example 3 | 2.48 | 159.6 | 98.5% |
| Comparative Example 4 | 2.50 | 161.5 | 99.3% |
| Comparative Example 5 | 2.50 | 158.6 | 93.5% |
| Comparative Example 6 | 2.46 | 161.8 | 97.6% |
| Comparative Example 7 | 2.35 | 161.7 | 96.9% |

It can be seen from the data in Table 1 that, when the particle size distribution curve of the positive electrode active material meets satisfies the definitions in the embodiments of the present application, the positive electrode active material has a high first charging gram capacity and high first cycle efficiency while achieving a high compaction density. The positive electrode active materials of the comparative examples do not satisfy the definitions in the embodiments of the present application, and cannot achieve a high compaction density in the positive electrode preparation process. When the positive electrodes of the comparative examples are assembled into cells, the first charging capacity and the first cycle efficiency are good, but the compaction density of the positive electrode active material is low, resulting in a low energy density of the cells of the comparative examples, and failing to meet requirements of electrical devices with long battery life.

While exemplary embodiments of the present application have been described above, the present application is not limited thereto. It should be appreciated that some improvements and modifications can be made by those skilled in the art without departing from the technical principles of the present application, which are also contemplated to be within the scope of the present application.

**Claims**

1. A positive electrode active material, wherein a particle size distribution curve of the positive electrode active material having only a first peak, and the positive electrode active material satisfying:

$$7 \leq -6 \times f_{Dfp} + 80 \times f_{D70} + (D70/\mu m) + 1.2 \times Dspn + 0.3 \times Cu \leq 10;$$

or

a particle size distribution curve of the positive electrode active material comprising a first peak and a second peak in sequence in a first direction, and the positive electrode active material satisfying:

$$7 \leq -6 \times f_{Dfp} + 80 \times f_{Dsp} + Dsp + 1.2 \times Dspn + 0.3 \times Cu \leq 10;$$

an abscissa of the particle size distribution curve being particle size in $\mu m$; an ordinate of the particle size distribution curve being percentage by volume; the first direction being a direction from 0 to positive infinity of the abscissa of the particle size distribution curve;
Dfp being a value, in $\mu m$, of a particle size corresponding to a peak value of the first peak; $f_{Dfp}$ being the peak value of the first peak;
Dsp being a value, in $\mu m$, of a particle size corresponding to a peak value of the second peak; $f_{Dsp}$ being the peak value of the second peak;

Dspn=(D90-D10)/D50, and Cu=D60/D10;

$f_{D70}$ is a percentage by volume corresponding to D70 in the particle size distribution curve of the positive electrode active material; and

D10, D50, D60, D70, and D90 are respectively particle sizes corresponding to cumulative percentages by volume of 10%, 50%, 60%, 70%, and 90% of the positive electrode active material, and are measured in $\mu$m.

2. The positive electrode active material according to claim 1, wherein $1\% \leq f_{Dfp} \leq 20\%$; and/or $0.1 \leq Dfp \leq 1$; and preferably, $1\% \leq f_{Dfp} \leq 11\%$.

3. The positive electrode active material according to claim 1 or 2, wherein $0 < f_{D70} \leq 20\%$; and/or $0.5\ \mu m \leq D70 \leq 10\ \mu m$; and preferably, $1\% \leq f_{D70} \leq 8\%$.

4. The positive electrode active material according to any one of claims 1 to 3, wherein Dspn$\leq$5.

5. The positive electrode active material according to any one of claims 1 to 4, wherein $1.5 \leq Cu \leq 6$.

6. The positive electrode active material according to any one of claims 1 to 5, wherein $0.1\ \mu m \leq D10 \leq 0.8\ \mu m$.

7. The positive electrode active material according to any one of claims 1 to 6, wherein $0.3\ \mu m \leq D50 \leq 3\ \mu m$.

8. The positive electrode active material according to any one of claims 1 to 7, wherein $0.4\ \mu m \leq D60 \leq 8\ \mu m$.

9. The positive electrode active material according to any one of claims 1 to 8, wherein $0.6\ \mu m \leq D90 \leq 12\ \mu m$.

10. The positive electrode active material according to any one of claims 1 to 9, wherein $0.5 \leq Dsp \leq 10$; and/or $0 < f_{Dsp} \leq 20\%$; and preferably, $1\% \leq f_{Dsp} \leq 8\%$.

11. The positive electrode active material according to any one of claims 1 to 10, wherein the positive electrode active material comprises modified or unmodified lithium iron phosphate.

12. The positive electrode active material according to any one of claims 1 to 11, wherein a length-to-diameter of the positive electrode active material is in a range of (1-10/7):1.

13. A positive electrode, comprising the positive electrode active material according to any one of claims 1 to 12.

14. A secondary battery, comprising the positive electrode according to claim 13.

15. An electrical device, comprising the secondary battery according to claim 14.

FIG. 1

FIG. 2

**EUROPEAN SEARCH REPORT**

Europäisches Patentamt
European Patent Office
Office européen des brevets

Application Number

EP 25 16 7223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN LEI ET AL: "Effects of Particle Size Distribution on Compacted Density of Lithium Iron Phosphate 18650 Battery", JOURNAL OF ELECTROCHEMICAL ENERGY CONVERSION AND STORAGE, vol. 15, no. 4, 20 August 2018 (2018-08-20), XP093232513, ISSN: 2381-6872, DOI: 10.1115/1.4040825 * table 1 * * figures 1,2 * * abstract * * page 3, line 15 - line 18 * * page 4, line 12 - line 13 * * page 4, line 18 - page 6, line 7 * | 1-15 | INV. H01M4/58 H01M10/0525 H01M4/136 H01M4/02 |
| X | WANG YONG ET AL: "LiFePO4/C composites with high compaction density as cathode materials for lithium-ion batteries with high volumetric energy density", IONICS, KIEL, DE, vol. 27, no. 11, 26 August 2021 (2021-08-26), pages 4687-4694, XP037591605, ISSN: 0947-7047, DOI: 10.1007/S11581-021-04078-X [retrieved on 2021-08-26] * table 1 * * figure 2b * * abstract * * page 4688, line 99 - line 100 * * page 4689, line 11 - line 34 * | 1-11, 13-15 | TECHNICAL FIELDS SEARCHED (IPC)  H01M |

-/--

The present search report has been drawn up for all claims

| Place of search | Date of completion of the search | Examiner |
|---|---|---|
| The Hague | 13 June 2025 | Al-Kutubi, Hanan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

**Application Number**

EP 25 16 7223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG YONG ET AL: "Effect of particle dispersion on the properties of LiFePO4 slurry and the electrochemical properties of the battery", IONICS, KIEL, DE, vol. 28, no. 4, 27 January 2022 (2022-01-27), pages 1547-1558, XP037746298, ISSN: 0947-7047, DOI: 10.1007/S11581-021-04412-3 [retrieved on 2022-01-27] * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 13 June 2025 | Al-Kutubi, Hanan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)